(19) **Europäisches Patentamt European Patent Office Office européen des brevets**

(11) **EP 4 497 990 B1**

(12) **FASCICULE DE BREVET EUROPEEN**

(45) Date de publication et mention de la délivrance du brevet:
**26.11.2025 Bulletin 2025/48**

(21) Numéro de dépôt: **24183397.9**

(22) Date de dépôt: **20.06.2024**

(51) Classification Internationale des Brevets (IPC):
*F17C 5/06* *(2006.01)*

(52) Classification Coopérative des Brevets (CPC):
**F17C 5/06;** F17C 2201/058; F17C 2221/012;
F17C 2223/0123; F17C 2223/036; F17C 2227/047;
F17C 2250/032; F17C 2250/0426; F17C 2250/043;
F17C 2250/0434; F17C 2250/0439;
F17C 2250/0443; F17C 2260/024; F17C 2260/026;
F17C 2265/065; (Cont.)

(54) **PROCÉDÉ D'ESTIMATION D'UN VOLUME DE RÉSERVOIR À REMPLIR À PARTIR D'UNE STATION DE DISTRIBUTION D'UN FLUIDE SOUS PRESSION**

VERFAHREN ZUR SCHÄTZUNG EINES TANKVOLUMENS, DER VON EINER ABGABESTATION EINES UNTER DRUCK STEHENDEN FLUIDS BEFÜLLT WIRD

METHOD FOR ESTIMATING A VOLUME OF TANK TO BE FILLED FROM A STATION FOR DISPENSING A PRESSURISED FLUID

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **25.07.2023 FR 2307995**

(43) Date de publication de la demande:
**29.01.2025 Bulletin 2025/05**

(73) Titulaire: **L'AIR LIQUIDE, SOCIETE ANONYME POUR L'ETUDE ET L'EXPLOITATION DES PROCEDES GEORGES CLAUDE
75007 Paris (FR)**

(72) Inventeurs:
• **GONIN, Rémi**
  **78350 JOUY-EN-JOSAS (FR)**
• **AMMOURI, Fouad**
  **78350 JOUY-EN-JOSAS (FR)**
• **VEMPAIRE, David**
  **38360 SASSENAGE (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
FR-A1- 2 948 437     FR-A1- 2 948 438
US-A1- 2019 301 678     US-B2- 11 604 087

(52) Classification Coopérative des Brevets (CPC):
(Cont.)F17C 2270/0178; F17C 2270/0184;
Y02E 60/32

**Description**

L'invention concerne un procédé d'estimation d'un volume de réservoir à remplir à partir d'une station de distribution d'un fluide sous pression.

FR2948438A1 divulgue un tel procédé.

Le fluide à transférer peut être de l'hydrogène gazeux. Le réservoir à remplir peut être intégré dans un véhicule, notamment un véhicule à pile à combustible.

Le procédé d'estimation d'un volume de réservoir à remplir comprend généralement les étapes suivantes :

- une étape d'injection d'un flux de fluide sous pression dans le réservoir,
- une étape de détermination d'une variation de pression dans le réservoir après l'injection du flux de fluide, la variation de pression étant déterminée par rapport à une pression initiale du réservoir avant l'injection,
- une étape de détermination d'une quantité du flux de fluide injecté dans le réservoir, et
- une étape d'estimation du volume du réservoir à remplir en fonction de la quantité du flux de fluide injecté dans le réservoir et en fonction de la variation de pression dans le réservoir après l'injection du flux de fluide.

La connaissance du volume du réservoir à remplir permet de déterminer notamment une rampe de pression suivant laquelle le réservoir sera rempli.

Si le volume du réservoir peut être communiqué à la station de distribution du fluide à l'aide d'un système de communication installé dans le véhicule abritant le réservoir à remplir, en l'absence d'un tel système de communication, ou pour des besoins de vérification de données communiquées par ce système de communication, la station de distribution doit être en mesure d'estimer de manière indépendante le volume du réservoir à remplir.

Les méthodes actuelles fournissent une estimation du volume du réservoir à remplir qui est loin d'être précise, de sorte qu'un coefficient de correction est généralement nécessaire pour approcher la valeur réelle du volume du réservoir à remplir.

Du reste, le coefficient de correction dépend des dimensions du réservoir à remplir et du scénario de remplissage (pression initiale, température d'injection, etc.). Ainsi, selon les méthodes actuelles d'estimation du volume d'un réservoir à remplir, il est nécessaire de recalculer ce coefficient de correction.

Par ailleurs, on connaît du document FR0955229 une méthode d'estimation du volume d'un réservoir à remplir, qui présente l'avantage d'être plus précise. Toutefois, cette méthode souffre de l'inconvénient de nécessiter un nombre relativement important de calculs et un processus itératif pour faire converger ces calculs sur une valeur de volume. Du reste, il peut arriver que le processus itératif selon cette méthode ne converge vers aucune valeur de volume.

Avec le développement croissant du marché des véhicules à pile à combustible, et compte tenu de la diversité des réservoirs à remplir et des stations de remplissage, il apparaît nécessaire de développer une méthode d'estimation de volume qui soit simple et universelle, et qui conduise à des résultats plus précis.

A cet effet, l'invention, par ailleurs conforme à la définition générique qu'en donne le préambule ci-dessus, est caractérisée en ce que le volume du réservoir à remplir est également estimé en fonction d'une température d'injection, c'est-à-dire une température du flux de fluide entrant dans le réservoir, et en fonction d'une variation de température dans le réservoir après l'injection du flux de fluide, la variation de température étant déterminée par rapport à une température initiale du réservoir avant l'injection.

Ainsi, pour l'estimation du volume du réservoir à remplir, le procédé selon l'invention retient une hypothèse thermodynamique (à savoir une variation de la température après injection) qui est plus proche de la réalité. En cela, l'invention se démarque de l'art antérieur selon lequel la température du fluide dans le réservoir est supposée constante durant l'injection.

Par ailleurs, en tenant compte de la température d'injection et de la variation de la température du fluide dans le réservoir après l'injection, le procédé selon l'invention permet d'obtenir une estimation plus précise du volume d'un réservoir. Ainsi, l'invention permet de s'affranchir de la nécessité de prévoir un coefficient de correction, et ouvre la possibilité d'estimer le volume de tout type de réservoir, et ce, quel que soit le scénario de remplissage rencontré au niveau de la station de distribution.

L'invention permet également d'obtenir une estimation de volume de manière directe, sans processus itératif.

Des modes de réalisation de l'invention peuvent comporter l'une ou plusieurs des caractéristiques suivantes :

La température initiale est estimée à la température ambiante.

Le volume du réservoir à remplir est relié à la quantité du flux de fluide injecté, à la variation de pression, à la température d'injection et à la variation de la température dans le réservoir, à travers une fonction obtenue à partir d'une équation d'état appliquée au fluide dans le réservoir, et à partir d'un bilan d'enthalpie appliqué au même fluide dans le réservoir.

L'équation d'état appliquée au fluide dans le réservoir est une équation de gaz réel donnée par :

$$pV = \frac{m}{M}Rz(p, T)T$$

avec p [Pa] ,V [m³], T [K], m [kg], M [kg/mol] et z (sans unité) respectivement la pression, le volume, la température, la masse, la masse molaire et la compressibilité du fluide dans le réservoir à remplir, et R [J/mol.K] la constante des gaz parfaits.

La fonction reliant le volume du réservoir à la température d'injection, la quantité du flux de fluide injecté dans le réservoir, la variation de pression dans le réservoir, et la variation de température dans le réservoir, peut s'écrire sous la forme d'un produit de deux facteurs :

- un premier facteur constant dépendant uniquement de la quantité du flux de fluide injecté dans le réservoir et de la variation de pression dans le réservoir, et
- un deuxième facteur $f(T_0, T_{inj}, p_0)$ dépendant de la pression initiale dans le réservoir, de la température d'injection et de la température initiale.

Le deuxième facteur peut s'écrire de la manière suivante:

$$f\left(T_0, T_{inj}, p_0\right) = \left[rzT_0 + \frac{r(z + T_0\frac{\partial z}{\partial T})(h(p_0, T_{inj}) - h(p_0, T_0))}{c_p}\right] \Big/ \left[1 - r\rho T_0\frac{\partial z}{\partial p} - r\left(z + T_0\frac{\partial z}{\partial T}\right)\frac{\beta T_0}{c_p}\right]$$

où $c_p$[J/(kg.K)], $\beta$[1/K], $\rho$[kg/m³] et $h(p_0, T_0)$ [J/kg] représentent respectivement la capacité calorifique massique, le coefficient de dilatation isobare, la masse volumique et l'enthalpie massique du fluide dans le réservoir; $h(p_0, T_{inj})$ [J/kg] représente l'enthalpie massique du flux de fluide injecté dans le réservoir, et r le rapport entre la constante des gaz parfaits R [J/mol.K] et la masse molaire M [kg/mol] du fluide dans le réservoir à remplir.

Le deuxième facteur $f(T_0, T_{inj}, p_0)$ est approximé par un polynôme d'interpolation f* $(T_0, T_{inj}, p_0)$.

Le polynôme f*$(T_0, T_{inj}, p_0)$ d'interpolation du deuxième facteur $f(T_0, T_{inj}, p_0)$ est un polynôme de degré deux et à trois variables $(T_0, T_{inj}, p_0)$ représentant respectivement la température initiale du fluide dans le réservoir, la température d'injection et la pression initiale du fluide dans le réservoir.

Le réservoir à remplir est relié fluidiquement à un réservoir source de la station de distribution de fluide par l'intermédiaire d'un distributeur.

La quantité du flux de fluide injecté dans le réservoir ainsi que la variation de pression dans le réservoir sont mesurées à l'aide de capteurs positionnés au niveau du distributeur.

D'autres particularités et avantages apparaîtront à la lecture de la description ci-après, faite en référence aux figures suivantes dans lesquelles :

[Fig. 1] illustre de manière schématique un réservoir à remplir relié fluidiquement à une station de distribution d'un fluide sous pression;

[Fig. 2] illustre de manière schématique les étapes du procédé selon l'invention.

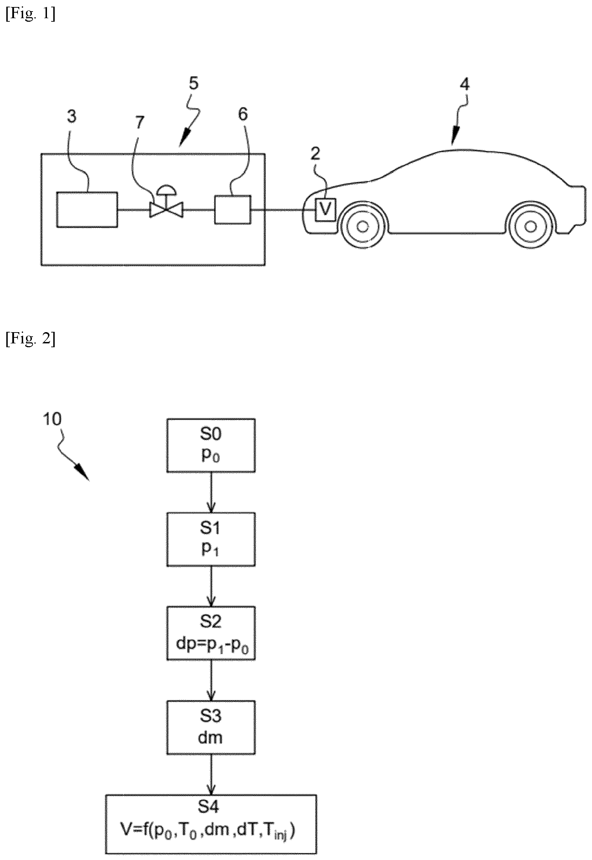

Comme illustré à la [Fig. 1], l'invention concerne un procédé 10 d'estimation d'un volume V d'un réservoir 2 à remplir (réservoir récepteur) à partir d'un réservoir source 3 contenant un fluide sous pression.

En référence à la [Fig. 2], le réservoir 2 à remplir peut être intégré dans un véhicule 4, et notamment un véhicule à pile à combustible. Le réservoir source 3 peut être installé au niveau d'une station 5 de distribution d'un fluide sous pression. Le fluide concerné peut être de l'hydrogène gazeux.

En particulier, la station 5 de distribution comprend également un organe 6 de distribution et une vanne 7 positionnée entre le réservoir source 3 et l'organe 6 de distribution.

L'organe 6 de distribution comprend une conduite de remplissage reliée au réservoir source 3 ainsi qu'un pistolet (non illustré) destiné à s'engager dans un réceptacle prévu au niveau du véhicule 4 contenant le réservoir 2 à remplir. En outre, l'organe 6 de distribution peut être équipé de capteurs (non illustrés) permettant de mesurer respectivement la température, la pression, le débit d'un flux de fluide entrant dans le réservoir 2 à remplir.

Le procédé 10 d'estimation comprend une étape S0 qui consiste à raccorder l'organe 6 de distribution de la station 5 au réceptacle du véhicule 4 contenant le réservoir 2 à remplir (communication fluidique entre la conduite de remplissage comprenant l'organe de distribution et le volume du réservoir 2). Au cours de cette étape S0, la vanne 7 reste fermée. Un équilibrage des pressions s'opère entre l'organe 6 de distribution et le réservoir 2 à remplir. Cet équilibrage permet de déterminer ou mesurer la pression initiale p0 du réservoir 2 à remplir.

Au cours de cette même étape S0, la température ambiante est mesurée par la station 5 de distribution. Elle peut être utilisée afin d'estimer la température initiale $T_0$ dans le réservoir 2 à remplir.

Au cours d'une étape S1, la vanne 7 est ouverte sur un laps de temps relativement court, de l'ordre de quelques secondes (par exemple 5s c'est-à-dire il y a injection d'un jet discret "pulse" en anglais). Le fluide provenant du réservoir source 3 est alors injecté dans le réservoir 2 à remplir suivant une rampe de pression prédéfinie, par exemple 5 bar/s. L'injection du fluide dans le réservoir 2 à remplir entraîne une augmentation de la pression mesurée par le capteur de pression.

Après fermeture de la vanne 7, la pression mesurée par le capteur de pression diminue pour atteindre une certaine valeur p1. Cette pression p1 est identique à celle du réservoir 2 à remplir.

Au cours d'une étape S2, le procédé 10 prévoit une mesure de la variation de pression entre un début t0 et une fin t1 de l'injection. Cette variation de pression peut s'écrire dp = $p_1$ - $p_0$. En outre, au cours de cette même étape S2 ou une étape différente S3, le procédé 10 prévoit également une mesure de la quantité dm du flux de fluide injecté dans le réservoir 2 à remplir.

La quantité dm du flux de fluide injecté dans le réservoir 2 à remplir (aussi appelée simplement dans ce qui suit quantité dm de matière) peut être obtenue par intégration temporelle du débit massique entre les instants $t_0$ et $t_1$:

$$dm = \int_{t_0}^{t_1} \dot{m} \, dt$$

Au cours d'une étape S4 du procédé 10, le volume V du réservoir à remplir est déterminé. Le calcul du volume V du réservoir 2 à remplir tient compte de la variation dp de pression, de la quantité dm du flux de fluide injecté dans le réservoir 2 à remplir, et de la température initiale $T_0$ du réservoir 2 à remplir.

Selon l'invention, le calcul du volume V tient également compte d'une température $T_{inj}$ d'injection, c'est-à-dire une température du flux de fluide entrant dans le réservoir 2 à remplir, et d'une variation de température dT dans le réservoir 2 après l'injection du flux de fluide, la variation de température étant déterminée par rapport à la température initiale $T_0$ du réservoir 2 avant l'injection.

La pression initiale $p_0$ et la température initiale $T_0$ du réservoir 2 avant l'injection, la variation dT de température, et la variation de masse dm dans le réservoir 2 après l'injection, ainsi que la température $T_{inj}$ d'injection sont prises en compte dans l'estimation du volume V du réservoir 2 à remplir à travers une corrélation qui peut s'écrire de la manière suivante:

$$V = f(p_0, T_0, dT, dm, T_{inj})$$

La corrélation ci-dessus est obtenue à partir d'une équation d'état appliquée au flux de fluide dans le réservoir 2 à remplir, et à partir d'un bilan d'enthalpie appliqué au même flux.

De façon avantageuse, en considérant le fluide comme un gaz réel, l'équation d'état du fluide injecté dans le réservoir 2 à remplir peut s'écrire de la manière suivante :

$$pV = \frac{m}{M} R z(p, T) T$$

avec p [Pa] ,V [m$^3$], T [K], m [Kg], M [kg/mol] et z (sans unité) respectivement la pression, le volume, la température, la masse, la masse molaire et la compressibilité du fluide dans le réservoir à remplir, et R [J/K/mol] la constante des gaz parfaits.

Le bilan d'enthalpie du fluide dans le réservoir 2 à remplir s'écrit de la manière suivante :

$$m c_p \frac{dT}{dt} = V\beta T \frac{dp}{dt} + k_g S_w (T_{g,w} - T) + \frac{dm}{dt}\left(h(p, T_{inj}) + \frac{u_{inj}^2}{2} - h(p, T)\right)$$

avec

$\beta$ [1/K], cp [J/(kg.K)], h [J/kg] respectivement le coefficient de dilatation isobare, la capacité calorifique massique et l'enthalpie massique du gaz ;
$u_{inj}$ [m/s] la vitesse des gaz d'injection ;
$S_w$ [m2], $T_{g,w}$ [K], kg [W/m$^2$/K] respectivement la surface intérieure du réservoir, la température moyenne de la surface de la paroi intérieure et le coefficient d'échange thermique entre le gaz et la paroi.

En négligeant l'échange thermique entre le gaz et la paroi du réservoir à remplir (c'est-à-dire en posant $k_s S_w (T_{g,w}$

- T) ≈ 0), et en négligeant l'énergie cinétique du fluide devant l'enthalpie (c'est-à-dire en posant $\frac{u_{inj}^2}{2} \ll h$ ), le bilan d'enthalpie peut s'écrire :

$$dT \approx \frac{V\beta T}{mc_p}dp + \frac{(h_{inj}-h(p,T))}{mc_p}dm.$$

Après dérivation de l'équation d'état présenté ci-dessus, et combinaison de l'expression dérivée avec l'expression simplifiée du bilan d'enthalpie ci-dessus, la corrélation entre le volume V du réservoir 2 à remplir, la température d'injection $T_{inj}$, la quantité dm, la variation dp de pression, et la variation dT de température peut s'écrire de la manière suivante:

$$V = f(T_0, T_{inj}, p_0)\frac{dm}{dp}, \text{ avec } f(T_0, T_{inj}, p_0) = \frac{(rzT_0 + \frac{r(z+T_0\frac{\partial z}{\partial T})(h(p_0,T_{inj})-h(p_0,T_0))}{c_p})}{(1-r\rho T_0\frac{\partial z}{\partial p}-r(z+T_0\frac{\partial z}{\partial T})\frac{\beta T_0}{c_p})}$$

La température initiale $T_0$ peut être approximée par une température ambiante mesurée au niveau de la station 5 de distribution.

Il convient de noter que la fonction $f(T_0, T_{inj}, p_0)$ est déterminée à partir de données de gaz réel fournies par la littérature (par exemple des données issues de l'institut national des normes et de la technologie (de l'anglais National Institute of Standards and Technology NIST).

En l'absence de données de gaz réel et/ou pour un calcul de volume rapide et précis par un automate, l'invention prévoit l'utilisation d'un polynôme f* $(T_0, T_{inj}, p_0)$ d'interpolation en lieu et place de la fonction $f(T_0, T_{inj}, p_0)$.

De façon avantageuse, le polynôme f*$(T_0, T_{inj}, p_0)$ d'interpolation peut être un polynôme de degré 2 et à trois variables $(T_0, T_{inj}, p_0)$. Ce polynôme peut s'écrire de la manière suivante :

$$f^*(T_1, T_{inj}, p_1) = a_0 + a_1 p_1 + a_2 T_{inj} + a_3 T_{inj} p_1 + a_4 T_1 + a_5 T_1 p_1 + a_6 T_{inj} T_1 + a_7 T_1 T_{inj} p_1 + a_8 T_1^2 + a_9 T_{inj}^2$$
$$+ a_{10} p_1^2$$

Les coefficients $a_i$ (avec i $\in[0, 10]$) du polynôme f*$(T_0, T_{inj}, p_0)$ d'interpolation peuvent être déterminés par une méthode de régression linéaire selon les moindres carrés.

Une étude de validation du procédé selon l'invention a permis de montrer que le volume V estimé à l'aide du polynôme f*$(T_0, T_{inj}, p_0)$ d'interpolation diffère très peu du volume V estimé à l'aide de la fonction $f(T_0, T_{inj}, p_0)$. Par ailleurs, une approximation de la température initiale $T_0$ par la température ambiante mesurée au niveau de la station donne des résultats satisfaisants.

## Revendications

1. Procédé (10) d'estimation d'un volume (V) de réservoir (2) à remplir à partir d'une station (5) de distribution d'un fluide sous pression, tel que l'hydrogène gazeux, le procédé (10) comprenant les étapes suivantes :

- une étape (S1) d'injection d'un flux de fluide sous pression dans le réservoir (2),
- une étape (S2) de détermination d'une variation de pression (dp) dans le réservoir (2) après l'injection du flux de fluide, la variation de pression étant déterminée par rapport à une pression initiale ($p_0$) du réservoir (2) avant l'injection,
- une étape (S3) de détermination d'une quantité (dm) du flux de fluide injecté dans le réservoir (2),
- une étape (S4) d'estimation du volume (V) du réservoir (2) à remplir en fonction de la quantité (dm) du flux de fluide injecté dans le réservoir (2) et en fonction de la variation de pression (dp) dans le réservoir (2) après l'injection du flux de fluide,

caractérisé en ce que le volume (V) du réservoir (2) à remplir est également estimé en fonction d'une température d'injection ($T_{inj}$), c'est-à-dire une température du flux de fluide entrant dans le réservoir (2), et en fonction d'une variation de température (dT) dans le réservoir (2) après l'injection du flux de fluide, la variation de température étant déterminée par rapport à une température initiale (T$_0$) du réservoir (2) avant l'injection.

**2.** Procédé (10) selon la revendication précédente, **caractérisé en ce que** la température initiale (T$_0$) est estimée égale à la température ambiante.

**3.** Procédé (10) selon l'une quelconque des revendications précédentes, **caractérisé en ce que** le volume (V) du réservoir (2) à remplir est relié à la quantité (dm) du flux de fluide injecté, à la variation (dp) de pression, à la température d'injection (T$_{inj}$) et à la variation de la température (dT) dans le réservoir (2), à travers une fonction obtenue à partir d'une équation d'état appliquée au fluide dans le réservoir (2) et à partir d'un bilan d'enthalpie appliqué au même fluide dans le réservoir (2).

**4.** Procédé (10) selon la revendication précédente, **caractérisé en ce que** l'équation d'état appliquée au fluide dans le réservoir (2) est une équation de gaz réel donnée par :

$$pV = \frac{m}{M}Rz(p,T)T$$

Avec p [Pa], V [m$^3$], T [K], m [kg], M [kg/mol] et z (sans unité) respectivement la pression, le volume, la température, la masse, la masse molaire et la compressibilité du fluide dans le réservoir (2) à remplir, et R [J/mol.K] la constante des gaz parfaits.

**5.** Procédé (10) selon l'une quelconque des revendications 3 ou 4, **caractérisé en ce que** la fonction reliant le volume (V) du réservoir (2) à la température d'injection (T$_{inj}$), la quantité (dm) du flux de fluide injecté dans le réservoir (2), la variation de pression (dp) dans le réservoir (2), et la variation de température (dT) dans le réservoir (2), peut s'écrire sous la forme d'un produit de deux facteurs :

- un premier facteur constant dépendant uniquement de la quantité (dm) du flux de fluide injecté dans le réservoir (2) et de la variation de pression (dp) dans le réservoir (2), et un
- deuxième facteur f(T$_0$, T$_{inj}$, p$_0$) dépendant de la pression initiale (p$_0$) dans le réservoir (2), de la température d'injection (T$_{inj}$) et de la température initiale (T$_0$).

**6.** Procédé selon la revendication précédente, **caractérisé en ce que** le deuxième facteur f(T$_0$, T$_{inj}$, p$_0$) s'écrit de la manière suivante:

$$f\left(T_0, T_{inj}, p_0\right) = \left[ rzT_0 + \frac{r(z+T_0\frac{\partial z}{\partial T})(h(p_0,T_{inj})-h(p_0,T_0))}{c_p} \right] \Big/ \left[ 1 - r\rho T_0 \frac{\partial z}{\partial p} - r\left(z + T_0 \frac{\partial z}{\partial T}\right)\frac{\beta T_0}{c_p} \right]$$

Où c$_p$[J/(kg.K)], β[1/K], ρ[kg/m$^3$] et h(p$_0$, T$_0$) [J/kg] représentent respectivement la capacité calorifique massique, le coefficient de dilatation isobare, la masse volumique et l'enthalpie massique du fluide dans le réservoir (2); h(p$_0$, T$_{inj}$) [J/kg] représente l'enthalpie massique du flux de fluide injecté dans le réservoir (2), et r le rapport entre la constante des gaz parfaits R [J/mol.K] et la masse molaire M [kg/mol] du fluide dans le réservoir (2) à remplir.

**7.** Procédé (10) selon la revendication précédente, **caractérisé en ce que** le deuxième facteur f(T$_0$, T$_{inj}$, p$_0$) est approximé par un polynôme d'interpolation f*(T$_0$, T$_{inj}$, p$_0$).

**8.** Procédé (10) selon la revendication précédente, **caractérisé en ce que** le polynôme f*(T$_0$, T$_{inj}$, p$_0$) d'interpolation du deuxième facteur f(T$_0$, T$_{inj}$, p$_0$) est un polynôme de degré deux et à trois variables (T$_0$, T$_{inj}$, p$_0$) représentant respectivement la température initiale du fluide dans le réservoir (2), la température d'injection et la pression initiale du fluide dans le réservoir (2).

**9.** Procédé (10) selon l'une quelconque des revendications précédentes, **caractérisé en ce que** le réservoir (2) à remplir est relié fluidiquement à un réservoir source (3) de la station (5) de distribution de fluide par l'intermédiaire d'un distributeur (6), la quantité (dm) du flux de fluide injecté dans le réservoir (2) ainsi que la variation de pression (dp) dans le réservoir (2) étant mesurées à l'aide de capteurs positionnés au niveau du distributeur (6).

**Patentansprüche**

1. Verfahren (10) zum Schätzen eines Volumens (V) eines zu füllenden Behälters (2) von einer Abgabestation (5) für ein unter Druck stehendes Fluid, wie beispielsweise Wasserstoffgas, wobei das Verfahren (10) die folgenden Schritte umfasst:

   - einen Schritt (S1) des Einspritzens eines Stroms von unter Druck stehendem Fluid in den Behälter (2),
   - einen Schritt (S2) des Bestimmens einer Druckänderung (dp) in dem Behälter (2) nach dem Einspritzen des Fluidstroms, wobei die Druckänderung in Bezug auf einen Anfangsdruck (po) des Behälters (2) vor dem Einspritzen bestimmt wird,
   - einen Schritt (S3) des Bestimmens einer Menge (dm) des in den Behälter (2) eingespritzten Fluidstroms,
   - einen Schritt (S4) des Schätzens des Volumens (V) des zu füllenden Behälters (2) in Abhängigkeit von der Menge (dm) des in den Behälter (2) eingespritzten Fluidstroms und in Abhängigkeit von der Druckänderung (dp) in dem Behälter (2) nach dem Einspritzen des Fluidstroms,

   **dadurch gekennzeichnet, dass** das Volumen (V) des zu füllenden Behälters (2) ebenfalls in Abhängigkeit von einer Einspritztemperatur (Tinj), d.h. einer Temperatur des in den Behälter (2) eintretenden Fluidstroms, und in Abhängigkeit von einer Temperaturänderung (dT) in dem Behälter (2) nach dem Einspritzen des Fluidstroms geschätzt wird, wobei die Temperaturänderung in Bezug auf eine Anfangstemperatur (To) des Behälters (2) vor dem Einspritzen bestimmt wird.

2. Verfahren (10) nach dem vorhergehenden Anspruch, **dadurch gekennzeichnet, dass** die Anfangstemperatur (To) als gleich der Umgebungstemperatur geschätzt wird.

3. Verfahren (10) nach einem der vorhergehenden Ansprüche, **dadurch gekennzeichnet, dass** das Volumen (V) des zu füllenden Behälters (2) mit der Menge (dm) des eingespritzten Fluidstroms, der Druckänderung (dp), der Einspritztemperatur (Tinj) und der Temperaturänderung (dT) im Behälter (2) durch eine Funktion in Beziehung gesetzt wird, die aus einer auf das Fluid im Behälter (2) angewendeten Zustandsgleichung und aus einer auf dasselbe Fluid im Behälter (2) angewendeten Enthalpiebilanz erhalten wird.

4. Verfahren (10) nach dem vorhergehenden Anspruch, **dadurch gekennzeichnet, dass** die auf das Fluid im Behälter (2) angewendete Zustandsgleichung eine Realgasgleichung ist, die gegeben ist durch:

$$pV = m/M \; Rz(p, \; T)T$$

   Wobei p [Pa], V [m³], T [K], m [kg], M [kg/mol] und z (einheitenlos) jeweils der Druck, das Volumen, die Temperatur, die Masse, die Molmasse und die Kompressibilität des Fluids in dem zu füllenden Behälter (2) sind, und R [J/mol.K] die ideale Gaskonstante ist.

5. Verfahren (10) nach einem der Ansprüche 3 oder 4, **dadurch gekennzeichnet, dass** die Funktion, die das Volumen (V) des Behälters (2) mit der Einspritztemperatur (Tinj), der Menge (dm) des in den Behälter (2) eingespritzten Fluidstroms, der Druckänderung (dp) im Behälter (2) und der Temperaturänderung (dT) im Behälter (2) in Beziehung setzt, in Form eines Produkts aus zwei Faktoren geschrieben werden kann:

   - einem ersten konstanten Faktor, der nur von der Menge (dm) des in den Behälter (2) eingespritzten Fluidstroms und von der Druckänderung (dp) im Behälter (2) abhängt, und einem
   - zweiten Faktor f(To, Tinj, po), der vom Anfangsdruck (po) im Behälter (2), von der Einspritztemperatur (Tinj) und von der Anfangstemperatur (To) abhängt.

6. Verfahren (10) nach dem vorhergehenden Anspruch, **dadurch gekennzeichnet, dass** der zweite Faktor f(To, Tinj, Po) wie folgt geschrieben wird:

$$f(To, \; Tinj, \; Po) \; = \; [rzTo \; + \; (r(z+To(dz/dp))(h(po,Tinj) - h(po,To)))/cp] \; / \; [1 - rpTo(dz/dp) - r(z + To(dz/dT))(\beta To/cp)]$$

   Wobei $c_p$[J/(kg.K)], $\beta$[1/K], $\rho$[kg/m³] und h(po, To) [J/kg] jeweils die spezifische Wärmekapazität, den isobaren Ausdehnungskoeffizienten, die Dichte und die spezifische Enthalpie des Fluids im Behälter (2) darstellen; h (po, Tinj) [J/kg] die spezifische Enthalpie des in den Behälter (2) eingespritzten Fluidstroms darstellt, und r das Verhältnis zwischen der idealen Gaskonstante R [J/mol.K] und der Molmasse M [kg/mol] des Fluids in dem zu füllenden Behälter (2) ist.

7. Verfahren (10) nach dem vorhergehenden Anspruch, **dadurch gekennzeichnet, dass** der zweite Faktor f(To, Tinj, Po) durch ein Interpolationspolynom f*(To, Tinj, Po) angenähert wird.

8. Verfahren (10) nach dem vorhergehenden Anspruch, **dadurch gekennzeichnet, dass** das Interpolationspolynom f* (To, Tinj, Po) des zweiten Faktors f(To, Tinj, Po) ein Polynom zweiten Grades mit drei Variablen (To, Tinj, Po) ist, die jeweils die Anfangstemperatur des Fluids im Behälter (2), die Einspritztemperatur und den Anfangsdruck des Fluids im Behälter (2) darstellen.

9. Verfahren (10) nach einem der vorhergehenden Ansprüche, **dadurch gekennzeichnet, dass** der zu füllende Behälter (2) fluidisch mit einem Quellbehälter (3) der Fluidabgabestation (5) über einen Verteiler (6) verbunden ist, wobei die Menge (dm) des in den Behälter (2) eingespritzten Fluidstroms sowie die Druckänderung (dp) im Behälter (2) mit Hilfe von am Verteiler (6) positionierten Sensoren gemessen werden.

**Claims**

1. A method (10) for estimating a volume (V) of a tank (2) to be filled from a dispensing station (5) for a pressurized fluid, such as hydrogen gas, the method (10) comprising the following steps:

   - a step (S1) of injecting a flow of pressurized fluid into the tank (2),
   - a step (S2) of determining a pressure variation (dp) in the tank (2) after the injection of the fluid flow, the pressure variation being determined with respect to an initial pressure (po) of the tank (2) before the injection,
   - a step (S3) of determining a quantity (dm) of the fluid flow injected into the tank (2),
   - a step (S4) of estimating the volume (V) of the tank (2) to be filled as a function of the quantity (dm) of the fluid flow injected into the tank (2) and as a function of the pressure variation (dp) in the tank (2) after the injection of the fluid flow,

   **characterized in that** the volume (V) of the tank (2) to be filled is also estimated as a function of an injection temperature (Tinj), that is to say a temperature of the fluid flow entering the tank (2), and as a function of a temperature variation (dT) in the tank (2) after the injection of the fluid flow, the temperature variation being determined with respect to an initial temperature (To) of the tank (2) before the injection.

2. The method (10) according to the preceding claim, **characterized in that** the initial temperature (To) is estimated to be equal to the ambient temperature.

3. The method (10) according to any one of the preceding claims, **characterized in that** the volume (V) of the tank (2) to be filled is related to the quantity (dm) of the injected fluid flow, to the pressure variation (dp), to the injection temperature (Tinj) and to the temperature variation (dT) in the tank (2), through a function obtained from an equation of state applied to the fluid in the tank (2) and from an enthalpy balance applied to the same fluid in the tank (2).

4. The method (10) according to the preceding claim, **characterized in that** the equation of state applied to the fluid in the tank (2) is a real gas equation given by:

$$pV = m/M \; Rz(p, \; T)T$$

Where p [Pa], V [m$^3$], T [K], m [kg], M [kg/mol] and z (unitless) are respectively the pressure, volume, temperature, mass, molar mass and compressibility of the fluid in the tank (2) to be filled, and R [J/mol.K] is the ideal gas constant.

5. The method (10) according to any one of claims 3 or 4, **characterized in that** the function relating the volume (V) of the tank (2) to the injection temperature (Tinj), the quantity (dm) of the fluid flow injected into the tank (2), the pressure variation (dp) in the tank (2), and the temperature variation (dT) in the tank (2), can be written in the form of a product of two factors:

- a first constant factor depending only on the quantity (dm) of the fluid flow injected into the tank (2) and on the pressure variation (dp) in the tank (2), and a
- second factor f(To, Tinj, po) depending on the initial pressure (po) in the tank (2), on the injection temperature (Tinj) and on the initial temperature (To).

6. The method (10) according to the preceding claim, **characterized in that** the second factor f(To, Tinj, Po) is written as follows:

```
f(To,  Tinj,  Po)  =  [rzTo  +  (r(z+To(dz/dp))(h(po,Tinj)-
h(po,To)))/cp] / [1 - rpTo(dz/dp) - r(z + To(dz/dT))(βTo/cp)]
```

Where $c_p$[J/(kg.K)], β[1/K], ρ[kg/m³] and h(po, To) [J/kg] respectively represent the specific heat capacity, the isobaric expansion coefficient, the density and the specific enthalpy of the fluid in the tank (2); h(po, Tinj) [J/kg] represents the specific enthalpy of the fluid flow injected into the tank (2), and r is the ratio between the ideal gas constant R [J/mol.K] and the molar mass M [kg/mol] of the fluid in the tank (2) to be filled.

7. The method (10) according to the preceding claim, **characterized in that** the second factor f(To, Tinj, Po) is approximated by an interpolation polynomial f*(To, Tinj, Po).

8. The method (10) according to the preceding claim, **characterized in that** the interpolation polynomial f*(To, Tinj, Po) of the second factor f(To, Tinj, Po) is a second-degree polynomial with three variables (To, Tinj, Po) respectively representing the initial temperature of the fluid in the tank (2), the injection temperature and the initial pressure of the fluid in the tank (2).

9. The method (10) according to any one of the preceding claims, **characterized in that** the tank (2) to be filled is fluidly connected to a source tank (3) of the fluid dispensing station (5) via a distributor (6), the quantity (dm) of the fluid flow injected into the tank (2) as well as the pressure variation (dp) in the tank (2) being measured by means of sensors positioned at the distributor (6).

[Fig. 1]

[Fig. 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2948438 A1
- FR 0955229